# EUROPÄISCHE PATENTSCHRIFT

(11) **EP 2 587 378 B1**
(45) Veröffentlichungstag und Bekanntmachung des Hinweises auf die Patenterteilung: **30.07.2014**
(21) Anmeldenummer: 12006936.4
(22) Anmeldetag: 06.10.2012
(51) Int. Cl.: G06F 11/18, G06F 11/20, G06F 11/14

(54) **Verfahren zum Betrieb einer Steuereinrichtung zum wenigstens teilweise autonomen Betrieb eines Fahrzeugs und Steuereinrichtung zur Durchführung solch eines Verfahrens**
Method for operating a control device for at least partially autonomous operation of a vehicle and control device for carrying out such a method
Procédé de fonctionnement d'un dispositif de commande pour la commande au moins en partie autonome d'un véhicule automobile et dispositif de commande pour la réalisation d'un tel procédé

(30) Priorität: 27.10.2011 DE 102011117113
(43) Veröffentlichungstag der Anmeldung: 01.05.2013
(73) Patentinhaber: Diehl BGT Defence GmbH & Co. KG, 88662 Überlingen (DE)
(72) Erfinder: Kopfstedt, Thomas, 88662 Überlingen (DE); Krogmann, Dirk, 78467 Konstanz (DE); Menges, Michael, 90461 Nürnberg (DE); Bullmer, Stefan, 90419 Nürnberg (DE)
(74) Vertreter: Diehl Patentabteilung

(56) Entgegenhaltungen:
- EP-A2- 1 672 505
- WO-A1-2011/120490
- US-A- 5 479 650
- US-A1- 2006 190 163
- US-B1- 6 650 979
- PRICE C E ED - INSTITUTE OF ELECTRICAL AND ELECTRONICS ENGINEERS: "FAULT TOLERANT AVIONICS FOR THE SPACE SHUTTLE", PROCEEDINGS OF THE DIGITAL AVIONICS SYSTEMS CONFERENCE. LOS ANGELES, OCT. 14 - 17, 1991; [PROCEEDINGS OF THE DIGITAL AVIONICS SYSTEMS CONFERENCE], NEW YORK, IEEE, US, Bd. CONF. 10, 14. Oktober 1991 (1991-10-14), Seiten 203-206, XP000309244, ISBN: 978-0-7803-0116-0

## Beschreibung

Die Erfindung betrifft ein Verfahren zum Betrieb einer Steuereinrichtung zum wenigstens teilweise autonomen Betrieb eines Fahrzeugs, insbesondere eines militärischen Fahrzeugs, welche Steuereinrichtung zur Ausführung miteinander kommunizierender Computerprogramme eines Softwarepakets zur Realisierung wenigstens einer auf den autonomen Betrieb bezogenen Funktion ausgebildet ist, sowie eine Steuereinrichtung.

Grundsätzliche Algorithmen, die die autonome oder teilweise autonome Steuerung von Fahrzeugen, insbesondere auch im militärischen Bereich, erlauben, sind im Stand der Technik bereits bekannt. Meist kann man das gesamte Paket an zur Steuerung benötigter Software dabei in Einzelfunktionen bzw. Einzelalgorithmen zerlegen, beispielsweise, wenn die Grundlage einer Wegpunktnavigation eine Selbstlokalisierung und eine Hinderniserkennung sind. Beim Entwurf von Steuereinrichtungen, insbesondere nachrüstbaren Steuereinrichtungen, die beispielsweise auf gängige Drive-By-Wire-Systeme aufgesetzt werden können, stehen sich meist verschiedene Interessen bei der Umsetzung solcher Algorithmen und bei der Auswahl der Sensorik, die einen großen Teil der Eingangsdaten der Algorithmen liefert, entgegen.

So ist es zum einen gewünscht, Software in Form von Computerprogrammen zu schaffen, die möglichst weitgehend einsetzbar ist, also für die verschiedensten Situationen, Aufgaben und gegebenenfalls sogar Fahrzeugtypen. Zum anderen aber werden Algorithmen zunehmend komplexer und aufwändiger, je mehr unterschiedliche Situationen, Verbauumgebungen und Anwendungsbereiche sie abdecken sollen. Daher ist es heutzutage meist üblich, plattform- und aufgabenspezifische Computerprogramme zu entwickeln, die dann aber letztlich nur in der speziellen Plattform für die spezielle Aufgabe verwendet werden können und Kompromisse enthalten, die es in vielen Situationen erschweren, Qualitätsziele bezüglich der Ergebnisse des Computerprogramms tatsächlich zu realisieren.

Der Erfindung liegt daher die Aufgabe zugrunde, eine Steuereinrichtung mit einer Software und Sensoren anzugeben, die robust gegenüber Fehlerfällen bzw. Schäden ist und flexibel für eine Mehrzahl von Situationen und Aufgaben einsetzbar ist.

Zur Lösung dieser Aufgabe ist bei einem Verfahren der eingangs genannten Art erfindungsgemäß vorgesehen, dass
- wenigstens ein Teil der Computerprogramme von wenigstens einem Sensor und/oder einem anderen Computerprogramm übermittelte Daten auswerten,
- wenigstens zwei gleichartige Daten auf einem unterschiedlichen Weg, insbesondere mittels eines unterschiedlichen Algorithmus, ermittelnde Computerprogramme und/oder wenigstens zwei zur Ermittlung gleichartiger Sensor-Daten ausgebildete unterschiedliche Sensoren als Datenquellen betrieben werden,
- als ein Computerprogramm wenigstens ein Entscheidermodul vorgesehen ist, dadurch gekennzeichnet, dass das Entscheidermodul unter Berücksichtigung wenigstens eines die Einsetzbarkeit der Algorithmen und/oder Sensoren beschreibenden Kriteriums die Verwendung der Daten der gleichartige Daten liefernden Datenquellen für wenigstens ein die Daten als Eingangsdaten verwendendes, nachgeschaltetes Computerprogramm steuert,
wobei das Entscheidermodul ausgewählte oder weiterverarbeitete Daten der Datenquellen an das nachgeschaltete Computerprogramm weitergibt, und
wobei die weiterzugebenden Daten anhand einer Wichtung der Daten unterschiedlicher Datenquellen aufgrund der Datenqualität ermittelt werden.

Der Begriff "Computerprogramme" im Sinne der vorliegenden Anmeldung ist breit zu interpretieren. Er umfasst generell alle Arten von Algorithmen, unabhängig davon, ob diese auf einem Computer, DSP, fPGA, IC, einem Microcontroller oder auf einer anderen Einheit ausführbar sind.

Dokument US-B-6 650 979 wird als nächstliegender Stand der Technik betrachtet weil es die Merkmale des Oberbegriffs des Patentanspruchs 1 offenbart.

Erfindungsgemäß wird also zunächst vorgeschlagen, eine modulare Softwareumgebung, mithin ein Softwarepaket, in dem mehrere eigenständige Computerprogramme miteinander kommunizieren, zu verwenden. Dies bietet die Möglichkeit, in Form unterschiedlicher Computerprogramme (Softwaremodule) unterschiedliche Algorithmen, die letztlich auch demselben Ziel dienen können, zu realisieren. Nachdem das System modular ist, lassen sich Computerprogramme leicht hinzufügen oder entfernen, was auch für Sensoren gilt. Zur Ausführung der Computerprogramme kann die Steuereinrichtung eine oder mehrere Recheneinheiten umfassen.

Letztlich wird zunächst eine aufgrund der Modularität des Softwarepakets leicht zu realisierende Art von "Redundanz" vorgeschlagen, indem Sensoren und/oder Computerprogramme vorgesehen sind, die gleichartige Daten liefern, insbesondere also ihre Informationen über eine identische Datenschnittstelle ausgeben. Ohnehin ist es im Rahmen der vorliegenden Erfindung sinnvoll und vorgesehen, dass wenigstens ein Teil der Computerprogramme eine festgelegte Datenschnittstelle aufweisen, so dass eine definierte Kommunikation zwischen den Computerprogrammen stattfinden kann. Bestimmte nachfolgende Computerprogramme erfordern mithin eine bestimmte Art von Informationen, beispielsweise eine Positionsinformation, in diesem bestimmten Format. Diese Information kann erfindungsgemäß nun auf mehr als einem Weg bzw. über mehr als einem Sensor erhalten werden.

Um nun entscheiden zu können, welche Daten mehrfach vorgesehener Datenquellen in einer aktuellen Gesamtsituation berücksichtigt werden sollen bzw. wie stark Daten gleichartige Informationen liefernder Datenquellen Eingang finden sollen, wird nun erfindungsgemäß vorgeschlagen, als bestimmte Art von Computerprogrammen Entscheidermodule vorzusehen, die anhand von Kriterien bestimmen, welche Algorithmen bzw. Sensoren in der aktuellen Gesamtsituation inwieweit verwendet werden sollen. Es kann also festgestellt werden, welche Datenquelle bzw. Kombination von Datenquellen jeweils zum aktuellen Zeitpunkt am besten geeignet ist und die beste Performance liefert.

Insbesondere kann dabei vorgesehen sein, dass die Datenquellen parallel betrieben werden, das bedeutet, jeweils ständig ihre Daten liefern. Es ist also denkbar, Funktionen parallel zu nutzen, welche über ähnliche Eigenschaften verfügen und gleichartige Daten über eine identische Datenschnittstelle liefern.

So ist es im Rahmen der vorliegenden Erfindung möglich, die Robustheit der gesamten Steuereinrichtung zu erhöhen, da auch bei Ausfall einer Datenquelle noch immer eine Datenquelle verbleibt, die die nötige Information liefert. Beispielsweise können zwei insbesondere parallel arbeitende Selbstlokalisationsalgorithmen eingesetzt werden, welche unterschiedliche Sensoren für die Positionsbestimmung verwenden, um gegen Ausfälle und Störungen in einem der Sensoren gefeit zu sein, wobei es zudem möglich ist, durch vergleichende Bewertung der Daten der unterschiedlichen Datenquellen die Qualität der erhaltenen Informationen zu erhöhen. Dies ermöglicht es den Computerprogrammen, welche von diesen Daten abhängen bzw. auf diesen Daten aufbauen, stets Daten von möglichst hoher Qualität zur Verfügung zu haben. Insbesondere bezieht sich dies auch, und hieraus resultiert eine erhöhte, weitaus verbesserte Flexibilität der erfindungsgemäß beschriebenen Steuereinrichtung, die konkrete Gesamtsituation zu betrachten, also insbesondere auch den Fahrzustand des Fahrzeugs, mithin Daten über das Fahrzeug selbst und/oder seine Umgebung. Häufig ist es so, dass in unterschiedlichen Situationen verschiedene Algorithmen oder Sensoren unterschiedlich gute Daten liefern, so dass die Gesamtqualität der letztlich realisierten autonomen Steuerung sinkt, wenn lediglich aus einer Datenquelle Daten betrachtet werden. Das Entscheidermodul kann solche Situationen jedoch berücksichtigen und aus der Mehrzahl vorhandener Wege, zu Daten zu gelangen, den geeigneten Weg oder die Kombination geeigneter Wege auszuwählen, die die Daten höchster Qualität zur Verfügung stellt.

Es ist also nicht mehr nötig, komplexe und aufwändige Computerprogramme zu schaffen, die möglichst viele dieser Situationen abdecken und dabei die Gesamtqualität gefährdende Kompromisse einzugehen, nachdem im modularen Softwarepaket der vorliegenden Erfindung leicht mehrere Algorithmen, die zu vergleichbaren gleichartigen Ergebnissen führen, problemlos realisiert werden können. Durch die Robustheit wird mithin erreicht, dass auch bei Schäden und Fehlerfällen Daten zur Verfügung stehen, während es die Flexibilität beim normal funktionierenden System erlaubt, immer Daten höchstmöglicher Qualität zu liefern, was die Gesamtqualität der Daten, die zur wenigstens teilweise autonomen Steuerung des Fahrzeugs führen, und mithin auch die wenigstens teilweise autonome Steuerung verbessert.

Es sei an dieser Stelle noch angemerkt, dass sich die vorliegende Erfindung auch hervorragend, insbesondere im militärischen Bereich, mit weiteren Maßnahmen zur Erhöhung der Robustheit und/oder Portabilität kombinieren lässt. Insbesondere lässt sich die vorliegende Erfindung auch hervorragend in einer Umgebung mit wenigstens zwei Recheneinheiten realisieren, die ein dezentrales System zur verteilten Ausführung miteinander kommunizierender Computerprogramme bilden, bei dem dann auch eine dynamische Umverteilung der Ausführung von Programmen bei einem Ausfall von Recheneinheiten vorgenommen werden kann und dergleichen. In solchen System können beispielsweise eine Middleware und ein Kommunikationsnetzwerk zur Kommunikation der Recheneinheiten dienen.

In Weiterbildung der vorliegenden Erfindung kann vorgesehen sein, dass das Entscheidermodul ausgewählte oder weiterverarbeitete Daten der Datenquellen an das nachgeschaltete Computerprogramm weitergibt. In diesem Fall wirkt das Entscheidermodul auch als die die insbesondere technischen und/oder physikalischen Daten der Datenquellen "weiterreichende" Instanz. Das Entscheidermodul empfängt die Daten der Datenquellen, bewertet sie anhand der Kriterien und bildet letztlich das Computerprogramm, von dem nachgeschaltete Computerprogramme die ausgewählten oder weiterverarbeiteten Daten dann erhalten.

Die weiterzugebenden Daten werden anhand einer Wichtung der Daten unterschiedlicher Datenquellen aufgrund der Datenqualität ermittelt. Mithin ist es möglich, sich nicht explizit für die Daten nur einer der Datenquellen zu entscheiden, sondern es ist auch möglich, diese anteilsweise zu berücksichtigen. Dies ist beispielsweise dann sinnvoll, wenn Daten einer grundsätzlich gerade etwas schlechteren Qualität jedoch Zusatzinformationen enthalten, die mit berücksichtigt werden sollen und ihre Qualität wiederum erhöhen. Auch derartige "Kompromissentscheidungen" lassen sich zur weiteren Erhöhung der Flexibilität und der letztendlichen Qualität des autonomen Steuerungsergebnisses realisieren.

Vorzugsweise ist ferner vorgesehen, dass das Entscheidermodul eine im Rahmen des Kriteriums auszuwertende Einsatzinformation aus den Daten ermittelt und/oder von der Datenquelle und/oder einer weiteren Informationsquelle, insbesondere eines der Computerprogramme, übermittelt erhält. Das Entscheidermodul nutzt also zur Beschreibung der aktuellen Gesamtsituation und/oder der Datenqualität Einsatzinformationen, die es entweder aus den Daten selbst schlussfolgern kann, oder aber auch von anderen Komponenten, insbesondere Computerprogrammen oder Sensoren, erhalten kann. Denkbar ist es im Übrigen selbstverständlich auch, dass eine der gleichartige Daten liefernden Datenquellen, also das entsprechende Computerprogramm oder der entsprechende Sensor, selbst eine solche als Einsatzinformation nutzbare Zusatzinformation gemeinsam mit seinen Daten liefert. Beispielsweise kann ein Sensor Daten über seinen Status oder die aktuelle Messgenauigkeit liefern, wobei ähnliche Vorgänge auch, beispielsweise durch Nutzung von Bewertungsalgorithmen, bei Computerprogrammen denkbar sind.

Konkret kann beispielsweise vorgesehen sein, dass als Einsatzinformation eine die Datenqualität der Daten der Datenquelle beschreibende Information und/oder eine die Verfügbarkeit der Datenquelle und/oder einer Eingangsdaten der Datenquelle zur Verfügung stellenden vorgeschalteten Datenquelle verwendet wird. Dabei wird letztlich die Datenqualität selbst, insbesondere im Hinblick auf eine Messgenauigkeit, eine Rechengenauigkeit oder dergleichen bewertet und berücksichtigt. Auch kann abgegriffen werden, wenn eine Komponente, beispielsweise ein Sensor, defekt oder anderweitig ausgefallen ist oder Kommunikationsverbindungen ausgefallen sind. So kann beispielsweise bei Ausfall eines Sensors automatisch ein alternativer Algorithmus, mithin ein alternatives Computerprogramm, ausgewählt werden, welche die benötigte Funktionalität unter Verwendung anderer Sensoren bereitstellt bzw. zumindest eine eingeschränkte Funktionalität erlaubt und die benötigten Daten zur Verfügung stellen kann.

Es ist ferner denkbar, dass als Einsatzinformation eine die aktuelle Fahrsituation des Fahrzeugs beschreibende Information, insbesondere eine Eigeninformation und/oder eine Umgebungsinformation, und/oder eine durch einen Bediener, insbesondere über eine Konfigurationsdatei, eingegebene Information verwendet wird. In diesem Zusammenhang ist es beispielsweise zweckmäßig, wenn auch der Output anderer Sensoren und/oder anderer Computerprogramme, die sich insbesondere mit der Umgebungs- und/oder Fahrzeugzustandserfassung befassen, bei der vorgenommenen Auswahl des Entscheidermoduls berücksichtigt werden. Auch auf durch einen Bediener, insbesondere über eine Konfigurationsdatei, eingegebene Informationen kann an dieser Stelle zurückgegriffen werden.

Die ausgewerteten Einsatzinformationen beziehen sich mithin auf technische Gegebenheiten, indem sie die aktuelle Gesamtsituation widerspiegeln. Defekte von Geräten, aktuelle Messgenauigkeiten und die konkrete Fahrsituation werden abgedeckt. Mithin können die Einsatzinformationen als die physikalische und/oder technische Gesamtsituation, in der sich das Fahrzeug befindet, betrachtet werden.

Es sei an dieser Stelle noch angemerkt, dass es selbstverständlich auch denkbar ist, dass die Kriterien selbst, beispielsweise als ein Regelsatz, einer Konfigurationsdatei entnommen werden können, beispielsweise einer XML-Datei, die durch das Entscheidermodul ausgelesen werden kann. Auf diese Weise ergibt sich im Übrigen auch eine besonders einfache Erweiterbarkeit des Gesamtsystems, indem beispielsweise neu vorgesehene Computerprogramme oder Sensoren als Datenquellen dem Entscheidermodul lediglich bekannt werden müssen, was über eine derartige Konfigurationsdatei geschehen kann. Dort können dann auch entsprechend angepasste Kriterien verankert werden.

In weiterer Ausgestaltung des erfindungsgemäßen Verfahrens kann vorgesehen sein, dass der zeitliche Verlauf der Daten wenigstens einer Datenquelle ausgewertet wird, insbesondere im Hinblick auf eine die Plausibilität der Daten beschreibende Einsatzinformation, und/oder dass Daten verschiedener Datenquellen gegeneinander plausibilisiert werden. Wie bereits angedeutet wurde, erlaubt die Verwendung mehrerer äquivalenter Datenquellen es auch, die Daten gegeneinander zu plausibilisieren, wobei eine Plausibilisierung auch anhand des zeitlichen Verlaufs der Daten nur einer Datenquelle möglich ist, beispielsweise, wenn starke Sprünge betrachtet werden oder dergleichen.

In weiterer Ausgestaltung der vorliegenden Erfindung kann vorgesehen sein, dass bei in verschiedene Komplexitätsebenen einteilbaren Datenquellen, insbesondere Computerprogrammen, jeder Komplexitätsebene wenigstens ein Entscheidermodul zugeordnet ist. Das bedeutet, es kann letztlich eine Hierarchie der Datenquellen vorgesehen sein, beispielsweise als unterste Schicht der Hierarchie die Sensoren als Rohsensordatenquellen selbst, als nächste Schicht eine datenvorverarbeitende Klasse von Computerprogrammen, woraufhin beispielsweise eine Schicht von Hilfsfunktionen folgen kann, welche dann von den eigentlichen Funktionen gefolgt wird. In einem derartigen hierarchischen Aufbau ist es nun möglich, in jeder Komplexitätsebene wenigstens teilweise gleichartige Informationen liefernde Datenquellen und eigene Entscheidermodule vorzusehen, so dass in jeder Ebene für sich letztlich eine Optimierung der Ausgabedatenqualität vorgenommen werden kann.

Die Entscheidermodule können auch mit weiteren Kompetenzen versehen werden. So kann vorgesehen sein, dass die Entscheidermodule in Abhängigkeit wenigstens eines insbesondere einen vollständigen Ausfall der gleichartigen Daten beschreibenden Notfallkriteriums eine zur Warnung eines Bedieners führende Warninformation und/oder eine zur Überführung des Fahrzeugs in einen sicheren Zustand dienende Steuerinformation ausgeben. Es kann also auch überwacht werden, ob die entsprechende Funktionalität, mithin die zur Verfügungstellung der gleichartigen Daten durch wenigstens eine der Datenquellen, überhaupt noch aufrechterhalten ist, so dass entsprechende Maßnahmen durch das Entscheidermodul eingeleitet werden können, beispielsweise durch Weitergabe der Warninformation bzw. der Steuerinformation an ein die Warnung bzw. die Steuerung des Fahrzeugs durchführendes weiteres System, Computerprogramm oder dergleichen. Doch nicht nur ein Totalausfall kann auf diese Weise behandelt werden, sondern es kann auch beispielsweise dann, wenn keine Plausibilität der Daten vorliegt und unklar ist, welche Daten eine korrekte Beschreibung abliefern, eine Warnung oder dergleichen erzeugt werden. Das Entscheidermodul ist besonders geeignet, Unregelmäßigkeiten schnell zu erkennen, um dann den Bediener zu warnen und/oder das Fahrzeug und/oder eines seiner Teilsysteme zurück in einen sicheren Betriebszustand zu versetzen.

Neben dem erfindungsgemäßen Verfahren betrifft die vorliegende Erfindung auch eine Steuereinrichtung, die zur Durchführung des erfindungsgemäßen Verfahrens ausgebildet ist. Sämtliche Ausführungen bezüglich des erfindungsgemäßen Verfahrens lassen sich analog auf die erfindungsgemäße Steuereinrichtung übertragen, so dass auch hiermit die genannten Vorteile erreicht werden können. Insbesondere kann die Steuereinrichtung wenigstens zwei Recheneinheiten umfassen, die ein dezentrales System zur verteilten Ausführung miteinander kommunizierender Computerprogramme bilden. Diesem kann ein kabelgebundenes Kommunikationsnetz zur Kommunikation der Recheneinheiten untereinander zugeordnet sein, insbesondere im Rahmen einer Middleware-Umgebung.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein Fahrzeug mit einer erfindungsgemäßen Steuereinrichtung,
- Fig. 2: eine erfindungsgemäße Steuereinrichtung, und
- Fig. 3: eine Prinzipskizze der Funktionsweise der Entscheidermodule.

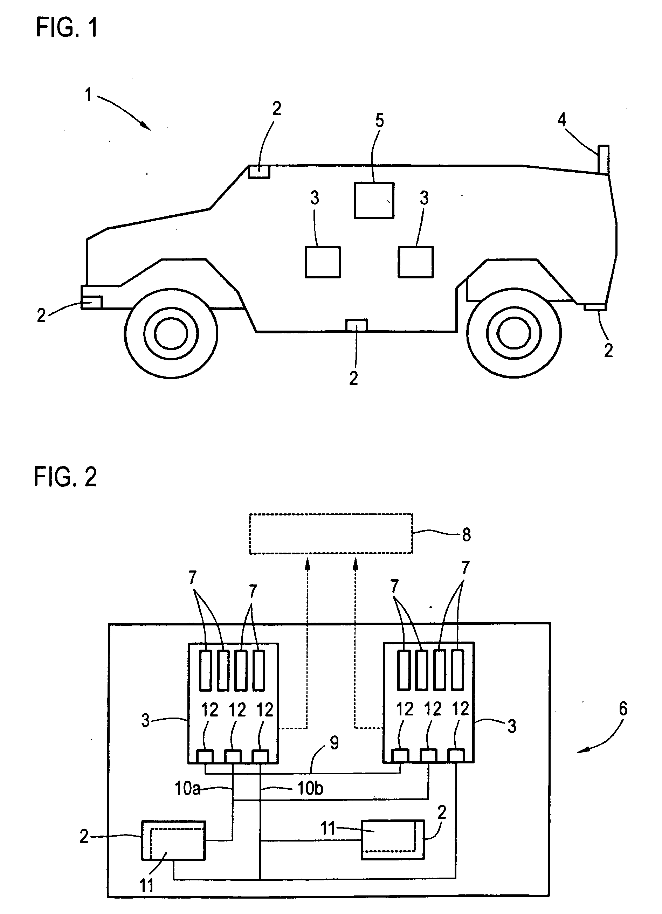

Fig. 1 zeigt in einer Prinzipskizze ein Fahrzeug 1, hier ein Allschutz-Transport-Fahrzeug (ATF), in dem eine erfindungsgemäße Steuereinrichtung verbaut ist. Dabei sind Fig. 1 insbesondere die Verbaupositionen diverser Komponenten zu entnehmen, hier von verschiedenen Sensoren 2 und von Baueinheiten 3, die Recheneinheiten der Steuereinrichtung enthalten. Ferner gezeigt ist eine Kommunikationseinrichtung 4, die bezüglich der vorliegenden Erfindung auch als ein Sensor aufgefasst werden kann. Das Fahrzeug 1 besitzt eine zentrale Energiequelle 5, wobei jedoch auch weitere Energiequellen vorgesehen sein können.

Wie bereits aus Fig. 1 ersichtlich ist, sind nicht nur die Sensoren 2 verteilt angeordnet, sondern auch die beiden Baueinheiten 3 sind räumlich beabstandet verbaut, so dass bei einem beispielsweise auftretenden Waffentreffer nur eine der Baueinheiten 3 beschädigt wird. Selbstverständlich können auch mehr als zwei Baueinheiten 3 vorgesehen werden.

Die Sensoren 2 können beispielsweise IMU, Encoder, GPS-Sensoren, Odometer, Laserscanner, verschiedene Arten von Kameras, Radarsensoren und/oder Ultraschallsensoren umfassen. Sie sind in der vorliegenden Ausführungsform entweder redundant vorgesehen oder wenigstens derart, dass äquivalente, das bedeutet, jeweils zur Versorgung bestimmter Funktionen nutzbare Sensoren vorliegen, beispielsweise mehrere Sensoren, die Daten liefern, die für eine Selbstlokalisierungsfunktion nützlich sind.

Die Steuereinrichtung, die im Hinblick auf die weiteren Figuren genauer beschrieben wird, bietet dabei, wie beschrieben, die Möglichkeit, verschiedene autonome und teilautonome Funktionen zu realisieren. Beispielsweise kann eine teleoperierte Steuerung realisiert werden, so dass eine Möglichkeit zur feinfühligen Bedienung eines außerhalb des direkten Sichtbereichs operierenden Fahrzeugs möglich ist. Ein autonomes Folgen ist ebenso denkbar, also die Möglichkeit, autonom einen definierten Abstand zu einem Trackingobjekt zu halten. Dies kann insbesondere auch bei Kurvenfahrten, Beschleunigungen und Bremsvorgängen des Trackingobjekts realisiert werden. Schließlich sei als Beispiel noch eine sogenannte Wegpunktnavigation genannt, das bedeutet, das Fahrzeug kann autonom beispielsweise in GPS-Koordinaten angegebene Wegpunkte gemäß der Auswahl eines Bedieners abfahren, wobei Kollisionen mit auftauchenden Hindernissen vermieden werden können und Ausweichmanöver eingeleitet werden können. Derartige autonome Fähigkeiten bzw. Funktionen werden dabei üblicherweise durch Zusammenwirken mehrerer Algorithmen realisiert, die im vorliegenden Verfahren modular durch Computerprogramme verwirklicht sind, so dass beispielsweise Unterfunktionen, die von verschiedenen übergeordneten Funktionen benötigt werden, gemeinsam genutzt werden können und dergleichen. Ein Beispiel für eine solche Unterfunktion ist die Selbstlokalisation. Algorithmen zum autonomen Betrieb von Kraftfahrzeugen und sonstigen Fahrzeugen, beispielsweise zur Realisierung der beispielhaft genannten Funktionen, sind im Stand der Technik bereits weithin bekannt, so dass sie hier nicht näher dargelegt werden sollen.

Fig. 2 zeigt in Form einer stark vereinfachten Prinzipskizze die Grundstruktur einer erfindungsgemäßen Steuereinrichtung 6. Sie umfasst, wie bereits erwähnt, die Baueinheiten 3, welche Recheneinheiten 7 enthalten. Die Recheneinheiten 7 aller Baueinheiten 3 bilden zusammen ein dezentrales System zur verteilten Ausführung miteinander kommunizierender Computerprogramme, wobei über den vorgesehen Satz von Computerprogrammen die autonomen Fähigkeiten realisiert werden können. Zur Kommunikation zwischen den Computerprogrammen dient dabei eine Middleware. Diese Computerprogramme umfassen auch Entscheidermodule, was im Hinblick auf

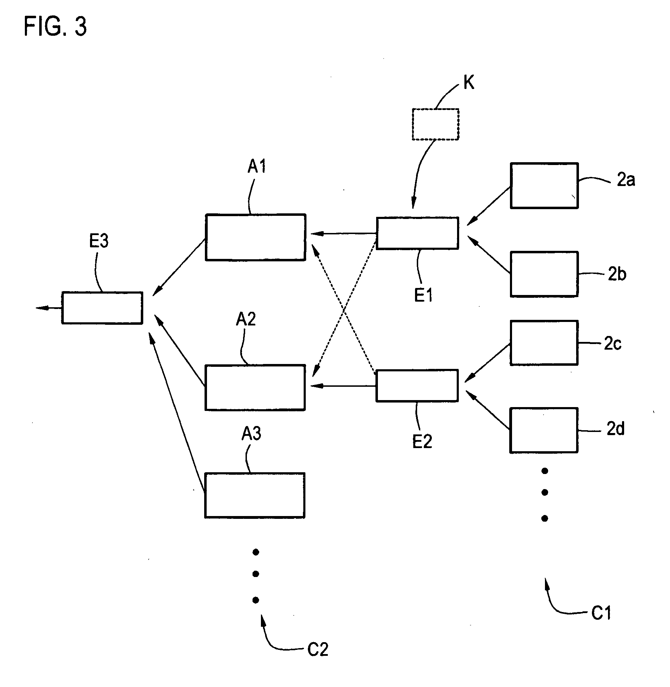

Fig. 3 noch näher erläutert wird.

Grundlage, um autonome Funktionen durchführen zu können, sind die Sensoren 2, die als Sensordaten Informationen über die Umgebung des Fahrzeugs 1 an die Computerprogramme auf den Recheneinheiten 7 liefern, welche diese in mehreren Stufen (Komplexitätsebenen) auswerten und hieraus letztendlich Steuerinformationen zur wenigstens teilweise autonomen Steuerung des Fahrzeugs 1 generieren, welche dann, wie bereits erwähnt, an ein Drive-By-Wire-System 8, das in dem Fahrzeug 1 bereits vorhanden ist, gegeben werden. Dabei weisen vorliegend die beiden Baueinheiten 3 jeweils eine getrennte Kommunikationsverbindung zu dem Drive-By-Wire-System 8 auf.

Es sei an dieser Stelle angemerkt, dass ein solches Drive-By-Wire-System 8 auch über eines der im Folgenden noch angesprochenen Kommunikationsnetzwerke angesprochen werden kann oder gar anzusteuernde Komponenten des Fahrzeugs 1, insbesondere Aktuatoren, wie beispielsweise ein Motor und/oder ein Roboterarm, direkt angesprochen werden können, was auch über eines der im Folgenden noch zu diskutierenden zweiten Kommunikationsnetzwerke denkbar ist.

Um ein dezentrales System zur Ausführung von Computerprogrammen zu bilden, ist eine Kommunikation der Recheneinheiten 7 der Baueinheiten 3 notwendig. Diese Kommunikation zwischen den Recheneinheiten 7 ist vorliegend durch ein erstes Kommunikationsnetzwerk 9 realisiert, welches auch als Middleware-Netzwerk bezeichnet werden kann. Dabei handelt es sich vorliegend um ein 1 GBit-Ethernet, wobei auch andere Ausgestaltungen, beispielsweise als ein BUS-Netzwerk denkbar sind.

Ferner ist es notwendig, dass die Daten aller Sensoren 2, von denen üblicherweise selbstverständlich mehr als die beispielhaft dargestellten zwei Sensoren 2 vorgesehen sind, an allen Recheneinheiten 7 für die Computerprogramme vorliegen müssen. Hierfür sind vorliegend zwei zweite Kommunikationsnetzwerke 10a, 10b vorgesehen, wobei eine vollständige redundante Ausführung gegeben ist, das bedeutet, alle Sensoren 2 sind an beide Kommunikationsnetzwerke 10a, 10b, die auch als Sensordaten-Netzwerke bezeichnet werden können, angeschlossen. Denkbar ist es selbstverständlich auch, jeweils bestimmte Gruppen von Sensoren einem der zweiten Kommunikationsnetzwerke 10a, 10b zuzuordnen. Die Kommunikationsnetzwerke 10a, 10b sind wie das erste Kommunikationsnetzwerk 9 als 1 GBit-Ethernet ausgebildet. Es ist jedoch auch denkbar, hier BUS-Netzwerke zu verwenden, oder die zweiten Kommunikationsnetzwerke 10a, 10b unterschiedlich auszubilden.

Um ihre Daten über die zweiten Kommunikationsnetzwerke 10a, 10b für die Recheneinheiten 7 auslesbar zu übertragen, weisen die Sensoren 2 eine Signalwandlereinrichtung 11 auf, die zur Umwandlung gemessener Sensordaten in über das Kommunikationsnetzwerk übertragbare Sensordaten ausgebildet ist.

Alle Kommunikationsnetzwerke 9, 10a und 10b sind kabelgebunden ausgebildet, wobei die Verkabelung, wie aus Fig. 2 deutlich ersichtlich ist, dezentral geführt ist, mithin keinen zentralen Knoten bildet. Hierfür sind die Kabel in unterschiedlichen Kabelkanälen geführt und es sind unterschiedliche Wege für die Kabel der verschiedenen Kommunikationsnetzwerke 9, 10a und 10b vorgesehen. Zum Anschluss der Recheneinheiten 7 an die Kommunikationsnetzwerke 9, 10a, 10b weist vorliegend jede Baueinheit 3 für die in ihr enthaltenen Recheneinheiten 7 gemeinsame Anschlüsse 12 auf.

Die Steuereinrichtung 6 ist nun zur Durchführung des erfindungsgemäßen Verfahrens ausgebildet, das bedeutet, es sind zum einen wenigstens zwei gleichartige Daten auf einem unterschiedlichen Weg ermittelnde Datenquellen vorgesehen. Dabei handelt es sich insbesondere um Computerprogramme, die beispielsweise Daten desselben Aussagegehalts und Formats, beispielsweise Positionsdaten, Bewegungsdaten oder dergleichen, mittels unterschiedlichen Algorithmen ermitteln, und Sensoren 2, die gleichartige Sensordaten ermitteln, aber unterschiedlich ausgebildet sind, beispielsweise also unterschiedliche Messprinzipien aufweisen. Datenquellen, die gleichartige Daten liefern, bilden mithin für jede Art von gleichartigen Daten Datenquellengruppen.

Zum anderen ist nun auf der Steuereinrichtung 6 als Teil der Computerprogramme für jede Datenquellengruppe wenigstens ein Entscheidermodul vorgesehen, welches dazu ausgebildet ist, unter Berücksichtigung von Kriterien, die die Einsetzbarkeit der Algorithmen bzw. Sensoren 2 beschreiben, die Verwendung der Daten der gleichartige Daten liefernden Datenquellen für nachgeschaltete Computerprogramme zu steuern, die diese Daten als Eingangsdaten verwenden. Das Entscheidermodul beurteilt also, ob in der aktuell gegebenen Situation die Daten bestimmter Datenquellen qualitativ hochwertiger bzw. in der aktuellen Gesamtsituation sinnvoller einsetzbar als die Daten anderer Datenquellen sind.

Dies sei nun anhand der Fig. 3, welche eine Prinzipskizze der Computerprogramm-und Sensorarchitektur zeigt, näher erläutert.

Dargestellt in Fig. 3 sind auf der rechten Seite eine Mehrzahl von Sensoren 2a, 2b, 2c, 2d. Weitere Sensoren sind andeutet. Die Sensoren 2a und 2b produzieren jeweils gleichartige Daten, mithin denselben zu sensierenden Umstand beschreibende Daten in demselben Datenformat. Dies gilt auch für die Sensoren 2c und 2d. Beispielsweise können zwei verschiedene, auf unterschiedlichen Technologien basierende Navigations-Sensoren vorgesehen werden und/oder zur Messung des Abstands eines Objekts Ultraschall- und Infrarotsensoren.

Entscheidermodule E1 und E2 nehmen die Daten der Sensoren 2a und 2b als eine Datenquellengruppe und der Sensoren 2c und 2d als weitere Datenquellengruppe entgegen. Dort werden die jeweiligen Daten nun anhand verschiedener Kriterien betrachtet, wobei bestimmte Einsatzinformationen, die letztlich die aktuelle Situation beschreiben, eingehen. Bezüglich zweier GPS-Sensoren kann als Einsatzinformation beispielsweise von den Sensoren selbst eine Aussage zur aktuellen Qualität der Ortsbestimmung mitgeliefert werden, welche dann im Rahmen eines Kriteriums mit betrachtet werden können. Auch können in diesem Fall beispielsweise als Einsatzinformationen Informationen, die die Satellitenabdeckung betreffen und dergleichen berücksichtigt werden. Auch Benutzerangaben und Daten zur sonstigen Ausstattung des Fahrzeugs und der konkreten Ausgestaltung der Steuereinrichtung 6 können Berücksichtigung finden, die beispielsweise über nur für das Entscheidermodul E1 angedeutete Konfigurationsdateien K ausgelesen werden können.

Bei Abstandsdaten eines Ultraschallsensors und eines Infrarotsensors können beispielsweise auch weitere Umgebungsbedingungen, beispielsweise Informationen über das Wetter, als Einsatzinformation mit berücksichtigt werden und dergleichen. Diese bestimmen stark die Qualität, mit der Daten aufgenommen werden können. Insgesamt beschreiben die Einsatzdaten also wenigstens teilweise physikalische und technische Aspekte der Gesamtsituation, in der sich das Fahrzeug 1 befindet.

Es sei jedoch darauf hingewiesen, dass als Einsatzinformation selbstverständlich auch Informationen über die weitere Verarbeitung der gleichartigen Daten mit in Betracht gezogen werden können, nachdem manche nachgeschalteten Computerprogramme andere Anforderungen stellen als andere nachgeschaltete Computerprogramme.

Zusammenfassend lässt sich also sagen, dass die Einsatzinformationen beispielsweise die Datenqualität der Daten der Datenquelle beschreibende Informationen, die Verfügbarkeit der Datenquelle beschreibende Informationen, die aktuelle Fahrsituation des Fahrzeugs 1 beschreibende Informationen und auch durch einen Bediener, direkt oder indirekt, eingegebene Informationen sein können. Fällt beispielsweise einer der Sensoren 2a, 2b, 2c oder 2d aus, so kann mit den Daten des jeweils anderen Sensors weitergearbeitet werden; sinkt die Datenqualität eines Sensors 2a, 2b, 2c oder 2d deutlich ab, können seine Daten weniger berücksichtigt werden und dergleichen.

Die Entscheidermodule E1 und E2 nehmen die Daten der Datenquellen, also der Sensoren 2a und 2b bzw. 2c und 2d, entgegen, betrachten sie anhand der Kriterien und geben letztlich Daten an nachgeschaltete Computerprogramme A1, A2, A3, weiter, welche diese als Eingangsdaten verwenden. Dabei können letztlich einfach die Daten einer Datenquelle ausgewählt werden, es ist aber auch denkbar, die Daten insbesondere gewichtet zusammenzufügen und somit die Messungen mehrerer Sensoren in die letztlich weiterzugebenden Daten einfließen zu lassen. Dabei ist es durchaus denkbar, dass ein Entscheidermodul E1, E2 Daten an mehrere nachgeschaltete Computerprogramme A1, A2 oder A3 weitergibt, wie auch durch die gestrichelten Pfeile in Fig. 3 angedeutet wird.

Doch auch die Computerprogramme A1, A2, A3, ... sind vorliegend auf diese Art und Weise redundant ausgeführt. So liefern auch die hier dargestellten Computerprogramme A1, A2 und A3 als Datenquellengruppe gleichartige Daten, und zwar gemäß einer vorgegebenen Datenschnittstelle, wobei jedoch unterschiedliche Algorithmen verwendet werden. Beispielsweise können die Computerprogramme A1, A2 und A3 als Programme zur Selbstlokalisation des Fahrzeugs 2 dienen, in dem ein GPS-basierter Algorithmus, ein Kalman-Filter basierter Algorithmus und ein "dead reckoning"-Algorithmus parallel eingesetzt werden. Diesen Computerprogrammen A1, A2 und A3 ist nun wiederum ein Entscheidermodul E3 zugeordnet. Betrachtet man die Sensoren 2a, 2b, 2c und 2d usw. und die Computerprogramme A1, A2 und A3 sowie weitere in diesem Abstraktionsbereich arbeitende Computerprogramme als Komplexitätsebenen C1 und C2, so kann man folglich sagen, dass die Entscheidermodule E1, E2, E3, ... gestaffelt vorliegen, also in jeder Komplexitätsebene C1, C2, ... wenigstens ein Entscheidermodul E1, E2, E3 vorliegt. Dabei sei darauf hingewiesen, dass eine Einsatzinformation, die Entscheidermodule höherer Komplexitätsebenen verwenden, durchaus auch die Verlässlichkeit von Datenquellen, die Eingangsdaten für die eigentlich betrachteten gleichartige Daten liefernde Computerprogramme liefern, berücksichtigt werden können, mithin insbesondere auch bei nicht äquivalente Sensoren aufweisenden Sensoren, denen mithin kein Entscheidermodul zugeordnet ist, eine Information über deren aktuell gelieferte Datenqualität und dergleichen.

So können in jeder Komplexitätsebene C1, C2, ..., in der eine Redundanz im erfindungsgemäßen Sinne durch Liefern von gleichartigen Daten auf unterschiedlichen Wegen gegeben ist, die gerade geeignetsten Daten ausgewählt bzw. erzeugt werden.

Es sei jedoch an dieser Stelle noch darauf hingewiesen, dass es durchaus auch möglich ist, aus dem zeitlichen Verlauf der Daten selber bzw. durch Plausibilisierung von Daten verschiedener Datenquellen gegeneinander eine Einsatzinformation zu ermitteln. Schließlich ist es auch denkbar, in den Entscheidermodulen E1, E2, E3 ein Notfallkriterium vorzusehen, dass bei einem vollständigen Ausfall der Datenquellen, die die gleichartigen Daten liefern, eine Warninformation und eine Steuerinformation, die das Fahrzeug 1 in einen sicheren Zustand überführen kann, ausgibt.

Wie bereits erwähnt, besteht die Software aus einem Satz von Computerprogrammen, die vorliegend insbesondere auch definierte Schnittstellen zum Datenaustausch aufweisen, so dass zum einen eine problemlose Kommunikation der Computerprogramme untereinander möglich ist, es zum anderen jedoch auch problemlos möglich ist, einzelne Computerprogramme (Softwaremodule) nachzurüsten oder auszutauschen.

Die Software ist also modular aufgebaut und kommuniziert im vorliegenden Fall über eine Middleware. Sie setzt sich aus diversen einzelnen Computerprogrammen zusammen, die beim jeweiligen Start durch Datenabruf über die Middleware oder auch durch Konfigurationsdateien die notwendigen Informationen erhalten, um die aktuelle Plattform des Fahrzeugs 1 voll nutzen zu können.

Nach dem Booten der entsprechenden Recheneinheit 7 wird zunächst ein Master-Computerprogramm auf jeder Recheneinheit 7 gestartet, welches auch als Haupt-Softwaremodul bezeichnet werden kann. Dieses Master-Computerprogramm liest nun aus verschiedenen Konfigurationsdateien (wobei auch eine Realisierung denkbar ist, in der nur eine einzige Konfigurationsdatei vorliegt) diverse Informationen ein. Die Konfigurationsdateien sind dabei vorliegend als XML-Dateien ausgebildet. Vorliegend ist eine Konfigurationsdatei für die Steuereinrichtung 6 selbst vorgesehen, eine weitere Konfigurationsdatei enthält Informationen über die Plattform (Kommunikationsschnittstelle, verfügbare Plattformdaten, Latenzen, Abmessungen der Plattform, dynamische und statische Grenzen der Plattform, usw.). Eine dritte Konfigurationsdatei enthält die Beschreibung der vorhandenen Sensoren 2, beispielsweise deren Typ, Kommunikationsschnittstelle, Einbauposition und dergleichen. Schließlich ist noch eine Konfigurationsdatei zur Beschreibung der vorhandenen Computerprogramme vorgesehen, in der jedes Computerprogramm, das in dem Satz von Computerprogrammen enthalten ist, registriert ist.

Die Master-Computerprogramme der Recheneinheiten stimmen sich dann entsprechend ab, um in der aktuellen Situation eine geeignete Verteilung von Computerprogrammen auf Recheneinheiten 7 zu ermitteln und zu realisieren.

Mithin ist ein komplett dezentrales Design mit einer Middleware ohne zentrales Element gegeben, wobei es zudem keine kritischen Computerprogramme gibt, sondern alle Computerprogramme dezentral mehrfach gelagert werden und auf verschiedenen Recheneinheiten 7 gestartet werden können. Alle Sensoren 2 können von allen Recheneinheiten 7 aus angesprochen und ausgelesen werden. Durch die Konfigurationsdateien kann die Software flexibel parametrisiert werden. Durch den komplett dezentralen Aufbau der Software und die Definition der Computerprogramme in den Konfigurationsdateien können einzelne Computerprogramme flexibel bei Bedarf ausgetauscht und ergänzt werden, ohne dass Änderungen am Gesamtsystem erforderlich sind. Zudem können, da alle Sensoren 2 direkt bzw. indirekt via Ethernet mit den Recheneinheiten 7 kommunizieren und die Kommunikation in den Konfigurationsdateien festgelegt ist, die Sensoren 2 bei Bedarf einfach getauscht, ersetzt und erweitert werden, ohne dass eine komplexe Anpassung der Computerprogramme erforderlich ist. Nur in den Konfigurationsdateien muss eine Anpassung vorgenommen werden. Auf diese Weise sind im übrigen auch Entscheidermodule geschickt konfigurierbar, nachdem beispielsweise neue gleichartige Daten liefernde Datenquellen lediglich in einer Konfigurationsdatei angemeldet werden müssen.

## Patentansprüche

1. Verfahren zum Betrieb einer Steuereinrichtung zum wenigstens teilweise autonomen Betrieb eines Fahrzeugs, insbesondere eines militärischen Fahrzeugs, welche Steuereinrichtung zur Ausführung miteinander kommunizierender Computerprogramme eines Softwarepakets zur Realisierung wenigstens einer auf den autonomen Betrieb bezogenen Funktion ausgebildet ist, wobei
- wenigstens ein Teil der Computerprogramme von wenigstens einem Sensor und/oder einem anderen Computerprogramm übermittelte Daten auswerten,
- wenigstens zwei gleichartige Daten auf einem unterschiedlichen Weg, insbesondere mittels eines unterschiedlichen Algorithmus, ermittelnde Computerprogramme und/oder wenigstens zwei zur Ermittlung gleichartiger Sensor-Daten ausgebildete unterschiedliche Sensoren als Datenquellen betrieben werden,
- als ein Computerprogramm wenigstens ein Entscheidermodul vorgesehen ist, **dadurch gekennzeichnet, dass** das Entscheidermodul unter Berücksichtigung wenigstens eines die Einsetzbarkeit der Algorithmen und/oder Sensoren beschreibenden Kriteriums die Verwendung der Daten der gleichartige Daten liefernden Datenquellen für wenigstens ein die Daten als Eingangsdaten verwendendes, nachgeschaltetes Computerprogramm steuert,
wobei das Entscheidermodul ausgewählte oder weiterverarbeitete Daten der Datenquellen an das nachgeschaltete Computerprogramm weitergibt, und
wobei die weiterzugebenden Daten anhand einer Wichtung der Daten unterschiedlicher Datenquellen aufgrund der Datenqualität ermittelt werden.

2. Verfahren nach Anspruch 1,
wobei das Entscheidermodul eine im Rahmen des Kriteriums auszuwertende Einsatzinformation aus den Daten ermittelt und/oder von der Datenquelle und/oder einer weiteren Informationsquelle, insbesondere eines der Computerprogramme, übermittelt erhält.

3. Verfahren nach Anspruch 2,
wobei als Einsatzinformation eine die Datenqualität der Daten der Datenquelle beschreibende Information und/oder eine die Verfügbarkeit der Datenquelle und/oder einer Eingangsdaten der Datenquelle zur Verfügung stellenden vorgeschalteten Datenquelle verwendet wird.

4. Verfahren nach Anspruch 2 oder 3,
wobei als Einsatzinformation eine die aktuelle Fahrsituation des Fahrzeugs beschreibende Information, insbesondere eine Eigeninformation und/oder eine Umgebungsinformation, und/oder eine durch einen Bediener, insbesondere über eine Konfigurationsdatei, eingegebene Information verwendet wird.

5. Verfahren nach einem der Ansprüche 2 bis 4,
wobei der zeitliche Verlauf der Daten wenigstens einer Datenquelle ausgewertet wird, insbesondere im Hinblick auf eine die Plausibilität der Daten beschreibende Einsatzinformation und/oder Daten verschiedener Datenquellen gegeneinander plausibilisiert werden.

6. Verfahren nach einem der vorangehenden Ansprüche,
wobei bei in verschiedene Komplexitätsebenen einteilbaren Datenquellen, insbesondere Computerprogrammen, jeder Komplexitätsebene wenigstens ein Entscheidermodul zugeordnet ist.

7. Verfahren nach einem der vorangehenden Ansprüche,
wobei die Entscheidermodule in Abhängigkeit wenigstens eines insbesondere einen vollständigen Ausfall der gleichartigen Daten beschreibenden Notfallkriteriums eine zur Warnung eines Bedieners führende Warninformation und/oder eine zur Überführung des Fahrzeugs in einen sicheren Zustand dienende Steuerinformation ausgibt.

8. Steuereinrichtung (6), ausgebildet zur Durchführung eines Verfahrens nach einem der vorangegangenen Ansprüche.

## Claims

1. Method for operating a control device for at least partially autonomous operation of a vehicle, in particular of a military vehicle, which control device is designed to carry out computer programs, which communicate with one another, of a software package in order to implement at least one function related to the autonomous operation, wherein
- at least some of the computer programs evaluate data transmitted by at least one sensor and/or another computer program,
- at least two computer programs which obtain data items of the same type in different ways, in particular by means of a different algorithm, and/or at least two different sensors which are designed to obtain sensor data items of the same type are operated as data sources,
- at least one decision module is provided as a computer program, **characterized in that** the use of the data of the data sources supplying data items of the same type is controlled by the decision module, for at least one computer program which is connected downstream and which uses the data as input data, by taking into account at least one criterion which describes the usability of the algorithms and/or sensors,
wherein the decision module passes on selected or further-processed data of the data sources to the downstream computer program, and
wherein the data which are to be passed on is obtained by weighting the data of different data sources on the basis of the data quality.

2. Method according to Claim 1,
wherein the decision module obtains use information, to be evaluated within the scope of the criterion, from the data and/or receives said use information by transmission from the data source and/or a further information source, in particular one of the computer programs.

3. Method according to Claim 2,
wherein information which describes the data quality of the data of the data source and/or a the availability of the data source and/or a the availability of a further data source which is connected upstream to the data source and which makes available input data to the data source is used as use information.

4. Method according to Claim 2 or 3,
wherein information which describes the current driving situation of the vehicle, in particular information about the vehicle and/or information about the surroundings and/or information which is input by an operator, in particular by means of a configuration file, is used as use information.

5. Method according to one of Claims 2 to 4,
wherein the time profile of the data of at least one data source is evaluated, in particular with respect to use information which describes the plausibility of the data and/or the plausibility of data items from various data sources are checked with respect to one another.

6. Method according to one of the preceding claims,
wherein in the case of data sources which can be divided into different complexity levels, in particular computer programs, each complexity level is assigned at least one decision module.

7. Method according to one of the preceding claims,
wherein the decision modules output, as a function of at least one emergency criterion describing, in particular, complete failure of the data items of the same type, warning information which causes the operator to be warned and/or control information which serves to place the vehicle in a safe state.

8. Control device (6), designed to carry out a method according to one of the preceding claims.

## Revendications

1. Procédé pour faire fonctionner un dispositif de commande pour le fonctionnement au moins partiellement autonome d'un véhicule, notamment un véhicule militaire, dispositif de commande qui est configuré pour exécuter des programmes informatiques communiquant entre eux d'un progiciel en vue de réaliser au moins une fonction en rapport avec le fonctionnement autonome,
- au moins une partie des programmes informatiques interprétant des données communiquées par au moins un capteur et/ou un autre programme informatique,
- au moins deux programmes informatiques qui déterminent des données du même type d'une manière différente, notamment au moyen d'un algorithme différent, et/ou au moins deux capteurs différents configurés pour la détermination de données de capteur du même type étant utilisés comme sources de données,
- au moins un module de décision étant prévu comme un programme informatique,
**caractérisé en ce que** le module de décision, en tenant compte d'au moins un critère décrivant l'aptitude à l'utilisation des algorithmes et/ou des capteurs, commande l'utilisation des données des sources de données délivrant des données du même type pour au moins un programme informatique branché en aval et utilisant les données en tant que données d'entrée,
le module de décision transférant les données sélectionnées ou transformées des sources de données au programme informatique branché en aval et les données à transférer étant déterminées à l'aide d'une pondération des données des différentes sources de données en se basant sur la qualité des données.

2. Procédé selon la revendication 1, selon lequel le module de décision détermine à partir des données une information d'utilisation à interpréter dans le cadre du critère et/ou se la fait communiquer par la source de données et/ou une source d'informations supplémentaire, notamment l'un des programmes informatiques.

3. Procédé selon la revendication 2, selon lequel l'information d'utilisation utilisée est une information décrivant la qualité de données des données de la source de données et/ou une la disponibilité de la source de données et/ou une la disponibilité d'une autre source de données branchée en amont de la source de données et délivrant les données d'entrée de la source de données.

4. Procédé selon la revendication 2 ou 3, selon lequel l'information d'utilisation utilisée est une information qui décrit la situation de conduite actuelle du véhicule, notamment une information propre et/ou une information d'environnement, et/ou une information saisie par un opérateur, notamment par le biais d'un fichier de configuration.

5. Procédé selon l'une des revendications 2 à 4, selon lequel l'évolution dans le temps des données d'au moins une source de données est interprétée, notamment du point de vue d'une information d'utilisation décrivant la plausibilité des données, et/ou un contrôle de la plausibilité mutuelle des données de différentes sources de données est effectué.

6. Procédé selon l'une des revendications précédentes, selon lequel, en présence de sources de données, notamment de programmes informatiques, divisibles en différents niveaux de complexité, au moins un module de décision est associé à chaque niveau de complexité.

7. Procédé selon l'une des revendications précédentes, selon lequel les modules de décision délivrent, en fonction d'au moins un critère d'urgence décrivant notamment une défaillance complète des données du même type, une information d'alerte entraînant un avertissement d'un opérateur et/ou une information de commande servant à amener le véhicule dans un état sécurisé.

8. Dispositif de commande (6) configuré pour mettre en oeuvre un procédé selon l'une des revendications précédentes.
